**Europäisches Patentamt**

**European Patent Office**

**Office européen des brevets**

(19)

(11) Veröffentlichungsnummer : **0 419 841 B1**

(12)

# EUROPÄISCHE PATENTSCHRIFT

(45) Veröffentlichungstag der Patentschrift :
**22.04.92 Patentblatt 92/17**

(51) Int. Cl.$^5$ : **C02F 1/72,** C02F 1/52, C02F 9/00

(21) Anmeldenummer : **90116048.1**

(22) Anmeldetag : **22.08.90**

(54) **Verfahren zur Absenkung des AOX-Gehaltes in Wasser.**

(30) Priorität : **27.09.89 DE 3932174**

(43) Veröffentlichungstag der Anmeldung :
**03.04.91 Patentblatt 91/14**

(45) Bekanntmachung des Hinweises auf die
Patenterteilung :
**22.04.92 Patentblatt 92/17**

(84) Benannte Vertragsstaaten :
**AT BE CH DE DK ES FR GB GR IT LI LU NL SE**

(56) Entgegenhaltungen :
**EP-A- 0 022 525**
**EP-A- 0 238 731**
**EP-A- 0 277 632**

(56) Entgegenhaltungen :
**WASSER - ABWASSER (GWF), Band 129, Nr. 7, Juli 1988, Seiten 484-491, München, DE; H. SCHWARZER: "Oxidative Abwasserreinigung mit Wasserstoffperoxid"**
**JOURNAL WATER POLLUTION CONTROL FEDERATION, Band 36, Nr. 9, September 1964, Seiten 1116-1128, Washington, DC, US; H.R. EISENHAUER: "Oxidation of phenolic wastes"**
**PATENT ABSTRACTS OF JAPAN, Band 10, Nr. 136 (C-347), 20. Mai 1985; & JP-A-60 261 590 (MURATA SANGYO) 24-12-1985**

(73) Patentinhaber : **Degussa Aktiengesellschaft Weissfrauenstrasse 9**
**W-6000 Frankfurt am Main 1 (DE)**

(72) Erfinder : **Fischer, Joachim**
**Buchbergstrasse 3**
**W-6458 Rodenbach 1 (DE)**
Erfinder : **Wolf, Hubert**
**Am Nussberg 19**
**W-6451 Hammersbach 2 (DE)**

## Beschreibung

Die Erfindung betrifft ein Verfahren zur Absenkung des Gehalts an halogenorganischen Schadstoffen in Wasser auf AOX-Restwerte unter 1 mg/l. Der Gesamtgehalt an diesen Schadstoffen wird in Form des sogenannten AOX-Gehaltes angegeben, worunter die Menge organisch gebundenes Halogen pro 1 Wasser verstanden wird. Das erfindungsgemäße Verfahren richtet sich insbesondere auf die Behandlung von Deponiesickerwasser und kontaminiertem Grundwasser, welche neben chlorierten aromatischen, heteroaromatischen cycloaliphatischen und langkettigen Schadstoffen auch kurzkettige Halogenkohlenwasserstoffe enthalten. Das Verfahren ist einstufig und elektrometrisch steuerbar.

Die Abtrennung von halogenorganischen Schadstoffen aus Wasser, insbesondere Abwasser, gewinnt aus toxikologischen und ökotoxikologischen Gründen an Bedeutung. So ist eine Behandlung von zum Beispiel Sickerwässern aus Deponien sowie mit halogenorganischen Schadstoffen belasteter Grundwässer erforderlich. Einerseits würden Deponiesickerwässer, wenn sie ohne Vorbehandlung in einen Vorfluten gelangen, zu starken Beeinträchtigungen von Fauna und Flora führen und bei Einleitung in eine biologische Kläranlage deren Betrieb empfindlich stören oder gar verhindern. Andererseits würde ein Versickern im Erdreich zu einer Verseuchung des Grundwassers führen, was dessen Verwendung zur Gewinnung von Trinkwasser verhindern würde. Die Behandlung von mit halogenorganischen Schadstoffen kontaminiertem Grundwasser ist erforderlich, um dessen Ausbreitung zu verhindern.

Für die Behandlung von halogenorganische Schadstoffe enthaltenden Sicker- und Grundwässern, welche im allgemeinen in mehr oder weniger großer Menge zusätzlich andere organische und anorganische Schadstoffe enthalten, stehen derzeit die folgenden physikalisch-chemischen Verfahren zur Verfügung - siehe K. Leonhard in "Berichte aus Wassergütewirtschaft und Gesundheitsingenieurwesen der Technischen Universität München" Nr. 74 (1987), 230-237: Flüssig-Flüssig-Extraktion, Strippung mit Dampf und Luft, Mono- oder Bidestillation, Adsorption an Aktivkohle.

Aufgrund der komplexen Zusammensetzung der infragestehenden Wässer ist eine vollständige Entfernung der eine biologische Reinigungsstufe störenden Schadstoffe im allgemeinen nur durch eine Kombination verschiedener und/oder mehrstufiger Verfahren möglich. Dies bedingt einen erheblichen Aufwand bei der Einstellung und dem Betrieb dafür geeigneter Anlagen. Wegen der z. T. rasch wechselnden Zusammensetzung der Wässer sind solche Verfahren von besonderem Interesse, welche bei kontinuierlichem Betrieb sicher steuerbar und damit wirtschaftlich zu betreiben sind.

Mit einer Flüssig-Flüssig-Extraktion können zwar chlororganische Verbindungen aus einer wäßrigen Phase abgetrennt werden, jedoch wird eine vollständige Abtrennung nur durch eine vierstufige Extraktion sichergestellt. Nachteilig ist ferner, daß gerade bei Sickerwässern eine starke Emulsionsbildung auftritt und ein Adsorptionsschritt der Extraktion nachgeschaltet werden muß.

Durch Strippung von halogenorganischen Schadstoffen mit Dampf oder Luft verteilen sich die Schadstoffe sowohl auf die Strippphase als auch die eigentliche Wasserphase, so daß aus beiden Phasen durch weitere Verfahren, etwa Adsorption oder Verbrennung, die jeweils darin enthaltenen halogenorganischen Schadstoffe entfernt werden müssen.

Die Eindampfverfahren sind einmal sehr energieaufwendig, zum anderen können mit den Brüden halogenorganische Schadstoffe, außer kurzkettigen Halogenkohlenwasserstoffen sogar perchlorierte Dibenzodioxine und Dibenzofurane, abgetrieben werden, so daß andere Verfahren, etwa eine Adsorption an Aktivkohle, nachgeschaltet werden müssen.

Die Adsorption von in hochbelasteten Abwässern oder Sickerwässern enthaltenen aromatischen, heteroaromatischen, cycloaliphatischen und aliphatischen Halogenverbindungen an Aktivkohle kann nur als Nachbehandlungsstufe angesehen werden, da der direkte Einsatz eine extrem hohe Einsatzmenge und zusätzlich eine mehrstufige Adsorptionsanlage erfordern würde. Ferner bedarf es dann der Entsorgung großer Mengen der kontaminierten Aktivkohle.

Auf der Adsorption halogenorganischer Schadstoffe an Aktivkohle basiert auch die AOX-Bestimmung: An einer hochreinen, halogenfreien Aktivkohle (z. B. Merck, Darmstadt, Art.Nr. 2216) werden die halogenorganischen Schadstoffe neben anderen Wasserinhaltsstoffen adsorbiert; nach der Veraschung wird in bekannter Weise der Cl-Gehalt bestimmt.

In der Zeitschrift "Korrespondenz Abwasser" 35, 9/1988, Seite 927-930 werden Erfahrungen mit der Sickerwasserbehandlung unter Einbeziehung adsorptiver Maßnahmen mitgeteilt. Eine mehrstufige Adsorptionsanlage unter Verwendung von Tonerden und Aktivkohlen brachte keine sichere Erniedrigung des AOX-Wertes unter 1 mg/l. Bessere Ergebnisse lassen sich zwar erzielen, wenn man einer A-Kohle-Behandlung mittels Einrührtechnik eine Festbettfiltration nachschaltet; hierdurch wird aber der Aufwand erhöht. In Gegenwart leichtflüchtiger Halogenkohlenwasserstoffe, wie insbesondere $C_1$- und $C_2$-Halogenalkanen sowie $C_2$-Halogenalkenen, bedarf es häufig zusätzlicher Behandlungsstufen.

Bekannt ist auch, Schadstoffe aus Abwässern durch Flockung bzw. Fällung unter Verwendung von insbesondere Verbindungen des dreiwertigen Eisens und Bildung von Eisen(III)-hydroxokomplexen zu eliminieren. Die Schadstoffe werden in der Flocke zum Teil eingeschlossen und/oder adsorptiv und/oder in Form von Fe-Komplexen chemisch gebunden und damit abtrennbar gemacht. So lassen sich beispielsweise zwar die CSB- und BSB-Werte von Sickerwässern absenken, jedoch wird eine Kombination mit einer Adsorption an Aktivkohle für erforderlich gehalten - vgl. H.-J. Ehrig in "Deponie: Ablagerung von Abfällen / K.J. Thomé-Kozmiensky" (1987), Seiten 560-579. Um den organischen Halogengehalt auf Werte unter 1 mg Cl/l Wasser abzusenken, bedurfte es der Anwendung einer Flockungsfällung mit Eisen(III)-chlorid gefolgt von einer Aktivkohlebehandlung - vgl. A.Denne und E. Ecker in "Altlasten / K.J. Thomé-Kozmiensky" (1987), Seiten 649-656.

Zur Behandlung von Sickerwasser mit biologisch schwer abbaubaren chlororganischen Verbindungen wurde auch eine Oxidation mit Wasserstoffperoxid in Gegenwart einer katalytischen Menge $Fe^{2+}$ erprobt - vgl. E. Gilbert und F. Bauer, Kernforschungszentrum Karlsruhe, KfK 4030, Febr. 1986. Bei einem pH-Wert unter 5 läßt sich bei einer $H_2O_2$-Dosis von 1 g $H_2O_2$ je g chemischem Sauerstoffbedarf (CSB) und einem $H_2O_2/Fe^{2+}$-Molverhältnis von 10:1 (Fentons Reagenz) und einer Reaktionszeit um eine Stunde ein großer Teil der organischen Schadstoffe abbauen. Unter diesen Bedingungen konnte aber der AOX-Wert als Maß für halogenorganische Schadstoffe zwar reduziert, aber bei weitem nicht unter 1 mg/l gesenkt werden. Wird nach der Oxidation der pH-Wert auf 7-8 eingestellt, fallen Eisen(III)-hydroxokomplexe (=Eisen(III)-oxidhydrat) aus, welche einen Teil des organischen Kohlenstoffs adsorbiert und eingeschlossen enthalten; dies ändert aber das Bild bezüglich des Restgehalts an chlororganischen Schadstoffen im behandelten Wasser nur wenig, und auch durch eine nachgeschaltete biologische Reinigungsstufe konnte der AOX-Wert nur um insgesamt 92 % reduziert werden.

Die Aufgabe der Erfindung besteht darin, ein Verfahren zur Abtrennung aller halogenorganischen Schadstoffe aus Wasser, das zusätzlich andere organische und anorganische Schadstoffe enthalten, aufzuzeigen, das es gestattet, durch Adsorption der halogenorganischen Schadstoffe an in situ gebildeten Eisen(III)-hydroxokomplexen den AOX-Gehalt einstufig auf Restwerte unter 1 mg/l abzusenken. Das Verfahren sollte ferner leicht steuerbar sein und mit einem möglichst niedrigen Einsatz an Chemikalien und geringem Anfall an kontaminierten Produkten auch dann zuverlässig betrieben werden können, wenn der Gehalt an Schadstoffen im zu behandelnden Wasser stark schwankt.

Die Aufgabe wird gelöst durch ein Verfahren zur Absenkung des Gehalts an halogenorganischen Schadstoffen in Wasser, das zusätzlich andere organische und/oder anorganische Schadstoffe enthalten kann, auf Werte (AOX-Restwerte) unter 1 mg organisch gebundenes Halogen pro 1 durch Adsorption der halogenorganischen Schadstoffe an in situ durch Hydrolyse von Eisen(III)-salzen gebildeten Eisen(III)-hydroxokomplexen in Gegenwart eines weiteren Adsorptionsmittels und gemeinsame Abtrennung der Adsorptionsmittel in flockiger Form bei pH 7 bis 10, das dadurch gekennzeichnet ist, daß man im Wasser den Gehalt an $Fe^{2+}$ bestimmt und, soweit erforderlich, durch Zugabe eines Eisen(II)-salzes einen Gehalt von 20 bis 1000 mg $Fe^{2+}$ pro 1 Wasser einstellt und anschließend ein Oxidationsmittel zur Überführung von $Fe^{2+}$ in $Fe^{3+}$ in einer Menge zugibt, die jene nicht überschreitet, welche zur Oxidation von mindestens 20 mg $Fe^{2+}$/l und maximal der anwesenden Menge $Fe^{2+}$/l in Gegenwart von ggf. anwesenden, wie $Fe^{2+}$ praktisch augenblicklich oxidierbaren anderen Bestandteilen erforderlich ist, und als zweites Adsorptionsmittel eine gefällte oder pyrogene Kieselsäure mit einer spezifischen Oberfläche von über 50 m2/g verwendet, welche in einer Menge von 50 bis 1000 mg/l während der Ausflockung der Eisen(III)-hydroxokomplexe zugegen ist.

Die Unteransprüche richten sich auf bevorzugte Ausführungsformen des Verfahrens.

Bei dem erfindungsgemäßen behandelnden Wasser kann es sich um Wasser unterschiedlicher Provenienz handeln, etwa um Prozeßwasser, Abwasser oder, besonders bevorzugt, um Deponiesickerwasser und kontaminiertes Grundwasser. Nach der Behandlung kann das Wasser, soweit erforderlich, einer biologischen Kläranlage zugeleitet werden. Der im Verfahren anfallende Schlamm aus Eisen(III)-hydroxokomplexen, auch als Eisen(III)-oxidhydrat bezeichnet, enthält nicht nur sämtliche aus dem Wasser abgetrennten halogenorganischen Schadstoffe, sondern er kann auch eine Reihe anderer Inhaltsstoffe des Wassers, wie z. B. Eisen-Huminsäure-Komplexe und Schwermetallcyanide im Falle eines Deponiesickerwassers, enthalten. Erfindungsgemäß gelingt es somit, nicht nur die anspruchsgemäßen Schadstoffe abzutrennen, sondern gleichzeitig werden auch der CSB-Wert (=Chemischer Sauerstoff-Bedarf) und ggf. Schadmetallgehalt erniedrigt.

Bei den abzutrennenden halogenorganischen Schadstoffen handelt es sich um Halogenverbindungen mit 1 bis 4°C-Atomen, längerkettige Halogenkohlenwasserstoffe, halogenierte Aromaten, Heterocyclen und Cycloaliphaten. Beispiele aus der Gruppe der Cl-$C_4$-Halogenverbindungen sind Methylenchlorid, Chloroform, Tetrachlorkohlenstoff, Di- Tri- und Tetrachlorethan, Vinylchlorid, Vinylidenchlorid, Tri- und Tetrachlorethylen, Allylchlorid, 1,4-Dichlorbuten; Beispiele der Schadstoffe mit mindestens 5 C-Atomen sind polychlorierte Dibenzodioxine und Dibenzofurane, polychlorierte Benzole, Chlorphenole, halogenhaltige Pestizide. Das erfindungsgemäße Verfahren ist stets dann einzusetzen, wenn das Wasser $C_1$-$C_4$-Halogenverbindungen, insbesondere

$C_1$- und $C_2$-Halogenalkane und -alkene, enthält, welche zum gesamten AOX-Gehalt beitragen.

Ohne den erfindungsgemäßen Zusatz einer hochdispersen Kieselsäure bleibt die Abtrennung der $C_1$-$C_4$-Halogenverbindungen unvollständig. Erfindungsgemäß gelingt es, den AOX-Wert in einer Stufe auf unter 1 mg/l, vorzugsweise unter 0,2 mg/l und besonders bevorzugt unter 0,1 mg/l, abzusenken. Es war überraschend, daß durch die Gegenwart von Kieselsäuren während der Bildung der Eisen(III)-hydroxokomplexe $C_1$-$C_4$-Halogenverbindungen praktisch quantitativ abgetrennt werden können, während eine alleinige Verwendung von Kieselsäuren oder ihr Zusatz nach beendeter Flockung der Fe(III)-hydroxokomplexe nicht zum Ziel führen.

Die Flockung bzw. Fällung von in situ durch Hydrolyse von Eisen(III)-verbindungen gebildeten Eisen(III)-hydroxokomplexen, welche kolloide und in wechselndem Umfang gelöste Bestandteile das Wasser durch Adsorption und/oder Einschluß abzutrennen gestattet, ist in der Abwassertechnik ein bekannter und auch praktizierter Verfahrensschritt. Üblicherweise wird dem Wasser eine lösliche Eisen(III)-verbindung zugegeben, und oberhalb eines pH-Wertes von etwa 3,5 beginnt die Ausfällung, welche bei pH 5 praktisch quantitativ ist. Zur Ausbildung eines leichter durch Schwerkraft abtrennbaren und entwässerbaren Niederschlags wird häufig ein pH-Wert oberhalb 7 eingestellt. Es wurde gefunden, daß durch diese bekannte Flockung in gewissem Umfang auch halogenorganische Schadstoffe abtrennbar sind. AOX-Restwerte unter 1 mg/l sind hiermit aber nicht erreichbar. Es war nicht vorhersehbar, daß durch Zugabe eines Oxidationsmittels zu einem Wasser, das 20 bis 1000 mg $Fe^{2+}$/l enthält, in situ solche Eisen(III)-hydroxokomplexe gebildet werden, welche halogenorganische Schadstoffe mit mindestens 5 C-Atomen und in Gegenwart einer kleinen Menge Kieselsäure zusätzlich halogenorganische Schadstoffe mit 1 bis 4 C-Atomen praktisch quantitativ adsorbieren oder in anderer Weise binden und bei pH 5 bis 10 abgetrennt werden können. Das zu behandelnde Wasser soll einen Gehalt von 20 bis 1000 mg $Fe^{2+}$ pro 1, vorzugsweise 50 bis 500 mg/g und besonders bevorzugt 100 bis 200 mg/g enthalten. Dieser $Fe^{2+}$-Gehalt kann oder teilweise bereits in dem zu behandelnden Wasser vorliegen oder durch Zugabe einer löslichen Eisen (II)-verbindung, vorzugsweise $FeSO \cdot 7H_2O$ oder $FeCl_2$, eingestellt werden. Üblicherweise wird man die Eisen (II)-verbindung als wäßrige Lösung einsetzen, da hiermit eine einfache Dosierung, wie sie für ein z. B. elektrometrisch gesteuertes kontinuierliches Verfahren zwingend ist, gewährleistet ist. Prinzipiell kann der $Fe^{2+}$-Gehalt auch über 1000 mg/l liegen, jedoch ist dies im Hinblick auf das daraus resultierende Schlammvolumen weniger empfehlenswert und zum Zwecke der Abtrennung der halogenorganischen Schadstoffe nicht erforderlich. Im Falle sehr geringer $Fe^{2+}$-Gehalte kann es vorteilhaft sein, nach der erfindungsgemäßen Oxidation und soweit erforderlich, ph-Einstellung ein polymeres Flockungshilfsmittel zur Verbesserung der Flockung und leichteren Abtrennung des Niederschlags zuzusetzen.

Zur Oxidation des $Fe^{2+}$ zu $Fe^{3+}$ wird dem $Fe^{2+}$ in ausreichender Menge enthaltenden Wasser ein Oxidationsmittel zugegeben. Es ist ein Kennzeichen des Verfahrens, daß die Oxidationsmittelmenge so bemessen wird, daß damit mindestens 20 mg $Fe^{2+}$/l bis maximal der anwesenden Menge $Fe^{2+}$/l, also maximal 1000 mg $Fe^{2+}$/l, in Gegenwart von ggf. anwesenden, wie $Fe^{2+}$ praktisch augenblicklich oxidierbaren anderen organischen und/oder anorganischen Inhaltsstoffen des zu behandelnden Wassers oxidiert werden. Vorzugsweise oxidiert man im wesentlichen die gesamte anwesende Menge $Fe^{2+}$ Es steht somit kein Oxidationsmittel zum oxidativen Angriff von C-Atomen zur Verfügung. Die vorbekannte oxidative Behandlung von Deponiesickerwasser unter Verwendung von Fentons Reagenz erforderte stets einen vielfachen Überschuß des Oxidationsmittels gegenüber $Fe^{2+}$, ohne daß die halogenorganischen Schadstoffe ausreichend abgebaut und abgetrennt werden konnten. Unter den ebenso leicht wie $Fe^{2+}$ oxidierbaren Stoffen sind solche zu verstehen, welche mit dem $Fe^{2+}$ unter den Betriebsbedingungen - im allgemeinen 5-25 °C - nennenswert um das zugegebene Oxidationsmittel konkurrieren; hierzu gehören beispielsweise organische und anorganische Sulfide, Sulfite.

Als Oxidationsmittel können im Prinzip solche verwendet werden, welche ein höheres Oxidationspotential als $Fe^{3+}$ haben, jedoch kommen in der Praxis nur solche in Betracht, welche dem Wasser keine neuen Schadstoffe zufügen. Chlor, Hypochlorit und Chlordioxid können verwendet werden, sind aber wegen der damit einhergehenden Aufsalzung und des sicherheitstechnischen Aufwands weniger empfehlenswert. Sauerstoff als Oxidationsmittel hat den Nachteil, daß es bei der Behandlung von stark kontaminiertem Wasser, wie Deponiesickerwasser, zu erheblichen Geruchsemissionen kommen kann. Eine Ozonisierung ist möglich, im Regelfall aber wenig wirtschaftlich. Bevorzugt werden anorganische Aktivsauerstoffverbindungen, wie insbesondere Wasserstoffperoxid, Perschwefelsäure, Persulfate, Natriumpercarbonat, Natriumperborate. Ganz besonders bevorzugt wird Wasserstoffperoxid in Form handelsüblicher wäßriger Lösungen mit einem Gehalt von 30 - 85 Gew.-%, soweit erwünscht, können auch verdünntere als 30 gew.-%ige Lösungen eingesetzt werden.

Dem zu behandelnden Wasser werden vor oder während, bevorzugt vor der Ausflockung der Eisen(III)-hydroxokomplexe, welche in der Regel bereits während der Oxidation des $Fe^{2+}$ zu $Fe^{3+}$ durch Hydrolyse erfolgt - sofern der pH-Wert nicht unter 3,5 sinkt - 50 bis 1000 mg/l einer hochdispersen Kieselsäure zugegeben. Vorzugsweise wird man die Zugabemenge möglichst niedrig halten, wobei die Menge durch einen Vorversuch leicht ermittelt werden kann; eine Zugabemenge von 50 - 500 mg/l und besonders bevorzugt 50 bis 200 mg reicht im allgemeinen aus, um den AOX-Gehalt nicht nur unter 1 mg/l, sondern unter 0,1 mg/l abzusenken. Die hochdisperse Kieselsäure soll eine spezifische Oberfläche von über 50 m²/g aufweisen, vorzugsweise eine solche von 150 bis 300 m²/g. Gefällte Kieselsäuren oder pyrogene Kieselsäuren oder Kieselgele können eingesetzt werden.

Das erfindungsgemäße Verfahren läßt sich durch Messung des $Fe^{2+}/Fe^{3+}$-Redoxpotentials sehr einfach steuern. Das $Fe^{2+}/Fe^{3+}$-Redoxpotential des sich in sich bekannter Weise, z. B. unter Verwendung einer Edelmetallelektrode und einer Bezugselektrode, messen läßt, kann sowohl zur Bestimmung des $Fe^{2+}$-Gehalts als auch zur Dosierung des Oxidationsmittels herangezogen werden, da bei vollständiger Überführung des $Fe^{2+}$ in $Fe^{3+}$ ein praktisch konstanter Potentialwert von +970 bis +980 mV (Pt/Thalamid-Elektrodenkette) erreicht wird. Unter Verwendung der genannten Elektrodenkette entspricht ein Potential von +450 mV etwa 1000 mg $Fe^{2+}$/l und ein Potentialwert von +600 mV etwa 70 mg $Fe^{2+}$/l - gemessen bei pH 7,2. Für die Aussteuerung der Dosiereinrichtung für die bedarfsgerechte Zugabe der $Fe^{2+}$-salzlösung kann ein Redox-Regler mit P- (=Proportional), PI- (=Proportional-Integral) oder PID- (=Proportional-Integral-Digital) Verhalten eingesetzt werden; auch der Einsatz einer SP-Steuerung (speicherprogrammiert) ist möglich. Die Dosierpumpe für das Oxidationsmittel wird automatisch geschlossen, wenn der vorgegebene Endpotentialwert erreicht ist.

Der pH-Wert des zu behandelnden Wassers kann zu Beginn im schwach sauren bis schwach alkalischen Bereich, etwa pH 5 bis 9, liegen. Während der Oxidation sinkt der pH-Wert je nach dem Gehalt an $Fe^{2+}$ als auch dem Puffervermögen des Wassers ab. Sofern nach der Zugabe des Oxidationsmittels der pH-inert unter 5 abgesunken ist, wird die meist während der Oxidationsmittelzugabe beginnende Ausfällung von Fe(III)-hydroxokomplexen durch anschließende Zugabe einer alkalisch wirkenden Alkali- oder Erdalkaliverbindung vervollständigt.

Wie bereits ausgeführt, wird der die adsorbierten halogenierten und ggf. andere Schadstoffe enthaltende Niederschlag aus Fe(III)-hydroxokomplexen und Kieselsäure bei pH 5 bis 10, vorzugsweise 7,5 bis 9, vom Wasser abgetrennt. Zur Abtrennung sind gängige Vorrichtungen, wie Eindicker, Separatoren, Zentrifugen, Filterpressen, einsetzbar. Der abgetrennte Niederschlag, der die Schadstoffe enthält, kann einer Verbrennungsanlage zugeführt werden.

Durch das erfindungsgemäße Verfahren lassen sich mittels einfacher Maßnahmen und mit geringem Chemikalienaufwand und gleichzeitig sicher steuerbar sehr niedrige AOX-Restwerte erzielen.

Die Erfindung wird durch die nachfolgenden Beispiele verdeutlicht.

Beispiel 1

Deponiesickerwässer und Grundwässer fallen meist in einem pH-Bereich von 6,5 bis 7,5 an. Bei diesem pH-Wert liegt das darin gelöste bzw. zugegebene $Fe^{2+}$ in gelöster Form vor, so daß mittels eines zuvor erstellten Diagramms die Konzentration in Abhängigkeit vom gemessenen Redoxpotential bestimmt werden kann.

a) 5 l Sickerwasser einer Sondermülldeponie mit einem pH-Wert von 6,2 , einem $Fe^{2+}$-Gehalt von 970 mg/l und einem AOX-Gehalt von 12 mg/l wurden zunächst mit einer verdünnten wäßrigen Wasserstoffperoxidlösung versetzt, die Zugabe des $H_2O_2$ wurde bei Erreichen eines $Fe^{2+}/Fe^{3+}$ Redoxpotentials von +980 mV - gemessen mit einer Platin/Thalamid-Elektrodenkette (Thalamid ist die Bezeichnung der Fa. Schott & Sen., Mainz für die Bezugselektrode) - beendet. Nach Einstellung eines pH-Wertes von 8,5 durch Zugabe von Natronlauge wurde filtriert. Der AOX-Restgehalt lag bei 4,9.

b) Das gleiche Sickerwasser wie bei a) wurde erfindungsgemäß behandelt, indem vor der $H_2O_2$-Zugabe 100 mg einer pyrogenen Kieselsäure mit einer spezifischen Oberfläche von 200 m²/g zugegeben wurden; bei ansonsten gleicher Arbeitsweise lag der AOX-Restgehalt unter 0,05 mg/l.

Beispiel 2

a) Ein Sickerwasser einer Hausmülldeponie wies einen pH-Wert von 7,8 und einen AOX-Gehalt von 2,4 mg/l auf. Elektrometrisch gesteuert wurden 200 mg $Fe^{2+}$ in Form einer 5 gew.-%igen Lösung von $FeSO_4 \cdot 7 H_2O$ zugegeben. Hierbei stellte sich ein Redoxpotential von +465 mV ein (Platin/Thalamid-Elektrodenkette). Nachfolgend wurde wäßriges $H_2O_2$ bis zum Erreichen eines Potentials von +980 mV zugegeben, was einer Oxidation des gesamten anwesenden $Fe^{2+}$ entsprach. Nach pH-Einstellung auf 8,5 unter Verwendung von Kalkmilch wurde filtriert. Der AOX-Restgehalt betrug unverändert 2,4 mg/l - der AOX-Wert resultierte im wesentlichen aus $C_1$- und $C_2$-Chlorkohlenwasserstoffen.

b) Das gleiche Wasser wurde erfindungsgemäß behandelt, indem nach beendeter $Fe^{2+}$-Zugabe-Redoxpotential +470 mV pro l 50 mg einer gefällten Kieselsäure (spez. Oberfläche 170 m²/g, Teilchengröße 20 µm) zugegeben. Anschließend wurde wäßriges $H_2O_2$ bis zu einem Redoxpotential von +975 mV zudosiert. Nach pH-Einstellung mit Kalkmilch auf 8,5 und Filtration wurde ein AOX-Restgehalt von unter 0,05 mg/l bestimmt.

**Patentansprüche**

1. Verfahren zur Absenkung des Gehaltes an halogenorganischen Schadstoffen in Wasser, das zusätzlich andere organische und/oder anorganische Schadstoffe enthalten kann, auf Werte (AOX-Restwerte) unter 1 mg organisch gebundenes Halogen pro l durch Adsorption der halogenorganischen Schadstoffe an in situ durch Hydrolyse von Eisen(III)-salzen gebildeten Eisen(III)-hydroxokomplexen in Gegenwart eines weiteren Adsorptionsmittels und gemeinsame Abtrennung der Adsorptionsmittel in flockiger Form bei pH 7 bis 10,
dadurch gekennzeichnet, daß man im Wasser den Gehalt an $Fe^{2+}$ bestimmt und, soweit erforderlich, durch Zugabe eines Eisen(II)-salzes einen Gehalt von 20 bis 1000 mg $Fe^{2+}$ pro l Wasser einstellt und anschließend ein Oxidationsmittel zur Überführung von $Fe^{2+}$ in $Fe^{3+}$ in einer Menge zugibt, die jene nicht überschreitet, welche zur Oxidation von mindestens 20 mg $Fe^{2+}$/l und maximal der anwesenden Menge $Fe^{2+}$/l in Gegenwart von ggf. anwesenden, wie $Fe^{2+}$ praktisch augenblicklich oxidierbaren anderen Bestandteilen erforderlich ist, und als zweites Adsorptionsmittel eine gefällte oder pyrogene Kieselsäure mit einer spezifischen Oberfläche von über 50 $m^2$/g verwendet, welche in einer Menge von 50 bis 1000 mg/l während der Ausflockung der Eisen(III)-hydroxokomplexe zugegen ist.

2. Verfahren nach Anspruch 1, dadurch gekennzeichnet, daß es sich bei dem zu behandelnden Wasser um Deponiesickerwasser oder kontaminiertes Grundwasser handelt und der AOX-Gehalt halogenorganische Schadstoffe mit 1 bis 4 C-Atomen einschließt.

3. Verfahren nach Anspruch 1 oder 2, dadurch gekennzeichnet, daß man den AOX-Gehalt auf Werte unter 0,2 mg/l, vorzugsweise unter 0,1 mg/l, absenkt.

4. Verfahren nach einem oder mehreren der Ansprüche 1 bis 3, dadurch gekennezeichnet, daß man als Oxidationsmittel eine anorganische Aktivsauerstoffverbindung, insbesondere Persulfate, Percarbonate oder besonders bevorzugt Wasserstoffperoxid verwendet.

5. Verfahren nach einem oder mehreren der Ansprüche 1 bis 4, dadurch gekennzeichnet, daß man dem Wasser eine solche Menge eines Eisen(II)-salzes zugibt, daß der Gehalt 50 bis 400 mg $Fe^{2+}$/l, vorzugsweise 100 bis 200 mg $Fe^{2+}$/l, beträgt, und durch Zugabe des Oxidationsmittels im wesentlichen das gesamte anwesende $Fe^{2+}$ in $Fe^{3+}$ überführt.

6. Verfahren nach einem oder mehreren der Ansprüche 1 bis 5, dadurch gekennzeichnet, daß man dem zu behandelnden Wasser vor der Oxidation 50 bis 500 mg/l, vorzugsweise 50 bis 200 mg/l Kieselsäure zugibt.

7. Verfahren nach einem oder mehreren der Ansprüche 1 bis 6, dadurch gekennezeichnet, daß man das Eisen(II)-salz als auch das Oxidationsmittel in Form wäßriger Lösungen zum zu behandelnden Wasser zugibt und die Zugabemengen über die Messung des $Fe^{2+}/Fe^{3+}$-Redoxpotentials steuert.

8. Verfahren nach Anspruch 7, dadurch gekennzeichnet, daß man unter Verwendung einer Platin/Thalamid-Elektrodenkette durch Zugabe einer wäßrigen Eisen(II)-salzlösung ein Redoxpotential im Bereich von +450 bis 600 mV einstellt und anschließend Wasserstoffperoxid als Oxidationsmittel in einer Menge zufügt, bis das Redoxpotential einen Wert von +980 mV annimmt.


**Claims**

1. A process for lowering the level of noxious organic halogen compounds in water which may in addition contain other organic and/or inorganic noxious substances to values (AOX residual values) below 1 mg of organically bound halogen per litre by adsorption of the noxious organic halogen compounds on iron(III)-hydroxo complexes formed in situ by the hydrolysis of iron(III) salts, this adsorption being carried out in the presence of another adsorbent and the two adsorbents being removed together in a flocculent form at pH 7 to 10,
characterised in that the level of $Fe^{2+}$ in the water is determined and is adjusted if necessary to 20 to 1000 mg of $Fe^{2+}$ per litre of water by the addition of an iron(II) salt,and an oxidizing agent is then added to convert the $Fe^{2+}$ into $Fe^{3+}$, this oxidizing agent being added in a quantity not exceeding that required for the oxidation of not less than 20 mg of $Fe^{2+}$ per litre and not more than the quantity of $Fe^{2+}$ present per litre in the presence of any other components, if present, which are virtually instantaneously oxidizable like $Fe^{2+}$, and the substance used as second adsorbent is a precipitated or pyrogenic silica having a specific surface area above 50 $m^2$/g, present in a quantity of from 50 to 1000 mg/litre during the flocculation of the iron(III) hydroxo complexes.

2. A process according to Claim 1, characterised in that the water to be treated is leakage water from waste dumps or contaminated ground water and the AOX content includes noxious organic halogen compounds having 1 to 4 carbon atoms.

3. A process according to Claim 1 or Claim 2, characterised in that the AOX content is reduced to values below 0.2 mg/l, preferably below 0.1 mg/l.

4. A process according to one or more of Claims 1 to 3, characterised in that the oxidizing agent used is an inorganic active oxygen compound, in particular persulphates, percarbonates or hydrogen peroxide, the latter being especially preferred.

5. A process according to one or more of Claims 1 to 4, characterised in that an iron(II) salt is added to the water in such a quantity that the $Fe^{2+}$ content amounts to 50 to 400 mg of $Fe^{2+}$ per litre, preferably from 100 to 200 mg of $Fe^{2+}$ per litre, and substantially all the $Fe^{2+}$ present is converted into $Fe^{3+}$ by the addition of the oxidizing agent.

6. A process according to one or more of Claims 1 to 5, characterised in that from 50 to 500 mg/l, preferably from 50 to 200 mg/l of silica is added to the water to be treated before the oxidation is carried out.

7. A process according to one or more of Claims 1 to 6, characterised in that both the iron(II) salt and the oxidizing agent are added in the form of aqueous solutions to the water to be treated and the quantities added are controlled by measuring the $Fe^{2+}/Fe^{3+}$ redox potential.

8. A process according to Claim 7, characterised in that the redox potential is adjusted to a value of from +450 to 600 mV by the addition of an aqueous iron (II) salt solution, using a platinum/thalamide electrode chain, and hydrogen peroxide is then added as oxidizing agent in a quantity required to reduce the redox potential to a value of +980 mV.

## Revendications

1. Procédé pour diminuer la teneur en produits nocifs halogénoorganiques dans l'eau, qui peut contenir en plus d'autres polluants organiques et/ou minéraux, à des valeurs (valeurs résiduelles en AOX) inférieures à 1 mg d'halogène lié organiquement par litre, par adsorption des polluants halogénoorganiques sur des complexes hydroxo de fer (III) formés in situ par hydrolyse de sels de fer (III) en présence d'un autre adsorbant et séparation commune de l'agent d'adsorption sous forme de flocons à pH de 7 à 10, caractérisé en ce qu'on mesure la teneur en $Fe^{2+}$ dans l'eau et, si nécessaire , par addition d'un sel de fer (II), on établit une teneur de 20 à 1000 mg de $Fe^{2+}$ par litre d'eau et ensuite on introduit un oxydant pour transformer $Fe^{2+}$ en $Fe^{3+}$ en quantité telle qu'elle ne dépasse pas celle nécessaire à l'oxydation d'au moins 20 mg de $Fe^{2+}$/l et d'au plus la quantité totale de $Fe^{2+}$/l en présence le cas échéant d'autres composants oxydables pratiquement instantanément comme $Fe^{2+}$, et qu'on utilise comme deuxième adsorbant une silice précipitée ou pyrogénée avec une surface spécifique supérieure à 50 m²/g, qu'on ajoute en une quantité de 50 à 1000 mg/l pendant la floculation des complexes hydroxo de fer (III).

2. Procédé selon la revendication 2, caractérisé en ce qu'il s'agit pour l'eau à traiter d'eau d'infiltration de décharge ou d'eau souterraine contaminée et que la teneur en AOX englobe des polluants halogénoorganiques de 1 à 4 atomes de C.

3. Procédé selon la revendication 1 ou 2, caractérisé en ce qu'on abaisse la teneur en AOX à des valeurs inférieures à 0,2 mg/l, de préférence inférieures à 0,1 mg/l.

4. Procédé selon l'une ou plusieurs des revendications 1 à 3, caractérisé en ce qu'on utilise comme agent oxydant un composé minéral à oxygène actif, notamment des persulfates, des percarbonates ou surtout du peroxyde d'hydrogène.

5. Procédé selon l'une ou plusieurs des revendications 1 à 4, caractérisé en ce qu'on ajoute à l'eau une quantité telle d'un sel de fer (II) que la teneur représente 50 à 400 mg de $Fe^{2+}$/l, de préférence 100 à 200 mg de $FE^{2+}$/l, et qu'on transforme pourl'essentiel tout le $Fe^{2+}$ présent en $Fe^{3+}$ par addition de l'agent oxydant.

6. Procédé selon l'une ou plusieurs des revendications 1 à 5, caractérisé en ce qu'on ajoute à l'eau à traiter avant l'oxydation 50 à 500 mg/l, de préférence 50 à 200 mg/l de silice.

7. Procédé selon l'une ou plusieurs des revendications 1 à 6, caractérisé en ce qu'on ajoute le sel de Fe (II) ainsi que l'agent oxydant sous forme de solutions aqueuses à l'eau à traiter et qu'on régule les quantités ajoutées par la mesure du potentiel redox $Fe^{2+}/Fe^{3+}$.

8. Procédé selon la revendication 7, caractérisé en ce qu'en utilisant une chaîne d'électrodes platine/ thalamide, par addition d'une solution saline de Fe (II), on ajuste un potentiel redox dans l'intervalle de + 450 à 600 mV et qu'ensuite on ajoute le peroxyde d'hydrogène en tant qu'agent oxydant en une quantité telle que le potentiel redox prenne une valeur de + 980 mV.